# EUROPEAN PATENT APPLICATION

(11) **EP 2 026 169 A1**
(43) Date of publication of application: **18.02.2009**
(21) Application number: 07252185.9
(22) Date of filing: 29.05.2007
(51) Int. Cl.: G06F 3/03

(54) **Detection means**

(71) Applicant: British Telecommunications Public Limited Company, London EC1A 7AJ (GB)
(72) Inventor: The designation of the inventor has not yet been filed
(74) Representative: Wilson, Peter David

(57) **Abstract**

An optical scrolling detection means for a computer mouse includes an array of optical transmitters, an array of optical receivers and a signal conditioning and processing unit. The optical transmitters and receivers are arranged such that the transmitting and receiving surface face the top of the computer mouse. The transmitted ray will be reflected to the optical receiver if there is a presence of user's finger on a detection surface. A scrolling gesture of the user on the detection surface can be detected by the optical receivers as an optical intensity change. The signals that correspond to the optical intensity change are converted to discrete signals that the scrolling direction, speed and amount can be interpreted from. These discrete signals are fed to a signal processing unit to generate scrolling signals are fed to a standard scrolling mouse controller to activate the scrolling function.

## Description

The present application relates to a detection means and in particular to a detection means for use with a mouse, or other pointing device for use with a computer.

When using a mouse, or similar pointing device, with a window-based operating system or application, in order to scroll up or scroll down the computer screen the mouse is moved to aim at the scroll up or scroll down icon (virtual button) and a mouse key is depressed. Optionally, the user can also move the mouse to aim at the scroll bar, while pressing a key on the mouse, and the computer screen can be scrolled by moving the mouse at the appropriate direction. However to implement such sub-function within the window-based operating system/application can still be tedious and inefficient especially when the user browses web pages, and wishes to scroll up or down the screen comfortably.

In order to improve the performance of the window based operating system or application, scrolling input devices have been developed such as in U.S. Pat. No. 5,530,455, for a mouse that can control the scrolling functions using a scrolling wheel or roller. Turning of such a 'scroll wheel' or roller by a user's finger indicates the extent of scrolling. Rotation of the roller is read by a shaft angle optical encoder that consists of optical transmitter and receiver. Alternatively as is disclosed in U.S Pat. No. 6,188,393 a mechanical encoder is used to measure the rotation of the scrolling wheel.

EP-A-1 182 606 discloses a mouse that has a button on the top surface of the mouse, which can be moved in the x-axis and/or the y-axis. The position and/or movement of the button is detected by illuminating a interior part of the button with a single diode and then detecting the reflected light.

According to a first aspect of the present invention there is provided a detection means for a computer input device, the detection means comprising: a detection region; one or more optical transmitters arranged to illuminate the detection region; a plurality of optical receivers arranged to detect light reflected from the detection means; and control means arranged, in use, to determine the variation of the intensity of the light reflected from the detection means. Preferably the control means is arranged, in use, to determine the variation of the intensity of the light reflected from the detection means at each of the optical receivers in the a plurality of optical receivers. This enables the control means to determine the motion of an object across the detection region.

By replacing a conventional scroll wheel with the detection means of the present invention, it is possible to replace a mechanical contact device with an optical device. This will increase the operational lifetime of a mouse incorporating the present invention as there are no mechanical parts to fail or break. The optical sensing used in the present invention also allows a mouse incorporating the present invention to be sealed, preventing dust and grease from entering into the interior of the mouse and potentially damaging the mouse components. The detection means of the present invention can also be implemented in a smaller space than a conventional mechanical scroll wheel, allowing for smaller lower profile computer input devices or for such a detection means to be integrated into a device where a conventional scroll wheel can not be used.

According to a second aspect of the present invention there is provided a computer input device, such as a mouse, comprising a detection means according to any preceding claim.

According to a third aspect of the present invention there is provided a method of detecting motion for use with a computer input device, the method comprising the steps of:
i) illuminating a detection region with one or more transmitters;
ii) arranging a plurality of optical receivers to detect light reflected from the detection region; and
iii) detecting the variation of the intensity of light reflected from the detection region at the plurality of optical receivers.

The invention will now be described with reference to the following Figures, that are provided by way of example only:
Figure 1 shows a schematic plan view of a computer mouse incorporating a detection means according to the present invention;
Figure 2 shows a schematic internal view of the computer mouse shown in Figure 1;
Figures 3a & 3b are schematic depictions showing the operation of a detection means according to the present invention;
Figure 4 shows a schematic depiction of the signal processing performed in a detection means according to the present invention;
   and
Figures 5 & 6 show a depiction of the data generated during the operation of a detection means according to the present invention.

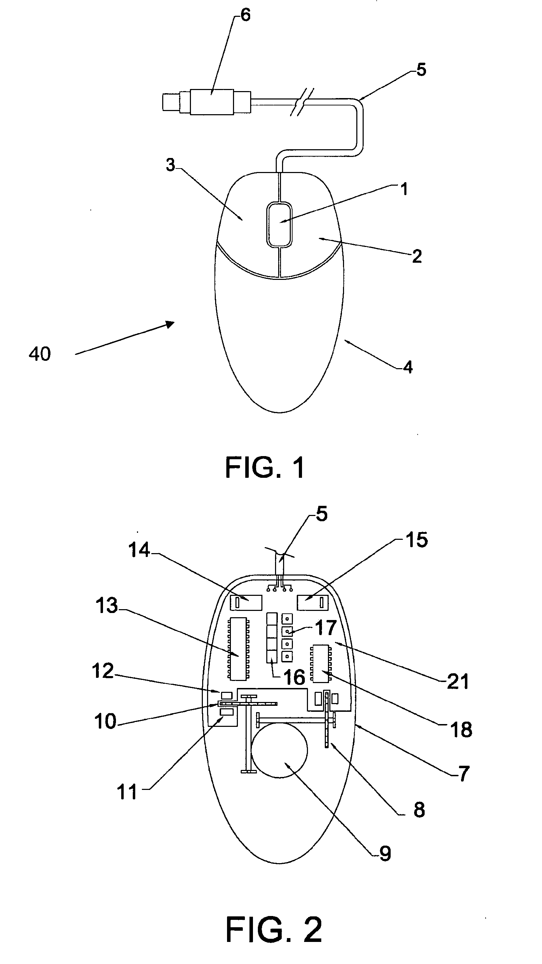

Figure 1 shows a schematic plan view of a computer mouse 40 according to the present invention which comprises a body 4 and first and second buttons 2 & 3. The mouse is connected to a first end of a cable 5 and the second end of the cable 5 has a connector 6 which is attached, in use, to a computer via a port that engages with the connector 6. The mouse also comprises a scroll detection area 1, which is located in the position that a scroll wheel is found in a conventional mouse. The scroll detection area may comprise an open aperture but it preferably comprises a region of material over which a user may move a finger. As is conventional, in use the user's hand will hold the main body of the mouse such that the fingers are able to depress the buttons 2 & 3 and activate the scroll detection area 1 as required.

Figure 2 shows a schematic internal view of the computer mouse 40 described above with reference to Figure 1. As is conventional the mouse comprises input switches 14 & 15, mouse controller module 13, tracking ball 9, optical encoders 8, which are mounted on a printed circuit board (PCB) 21.. The input switches detect the depression of the buttons 2 & 3 and send an appropriate signal to the mouse controller module 13. The motion of the mouse causes the tracking ball to move and the motion of the tracking ball is detected by the optical encoders 8. The tracking ball 9 is located in a central region of the mouse housing and its motion is detected by two optical encoders 8 with each optical encoder comprising a rotary disk 10, optical transmitter 12 and receiver 11. The outputs of each of the optical encoders 8 are sent to the mouse controller module 13. The mouse controller module, in use, sends a signal via cable 5 to a connected computer in a format that can be interpreted by the computer such that the on-screen pointer (or cursor) moves in the manner desired by the user and such that any actions can be performed in response to the depression of the buttons 2 & 3.

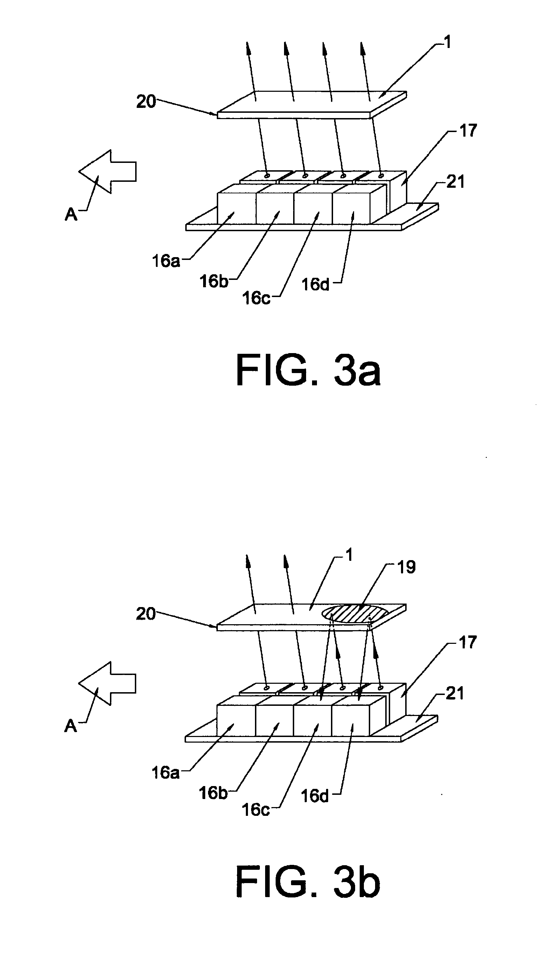

The mouse further comprises an array comprising a plurality of optical receivers 16, an array comprising a plurality of optical transmitters 17 and a signal processing unit 18, all of these being mounted on the PCB 21. The array of optical transmitters are arranged such that the light emitted from the array illuminates the scroll detection area 1 (see Figure 3a). When a user places a finger over the outer surface of the scroll detection area 1 then light is reflected back from the finger into the mouse, where it is detected by one or more of the receivers in the array of optical receivers 16 (see Figure 3b). Figure 3a shows that a partial covering of the scroll detection area causes a part of the receiver array to receive light that has been reflected from the covered part of the scroll detection area. As a finger is moved across the scroll detection area then the part of the receiver array that receives reflected light will 'move' across the array. The signal processing unit 18 is connected to the receiver array such that the signal processing unit 18 can detect which of the receivers 16a, 16b, 16c, 16d that comprise the receiver array are illuminated by the reflected light and the intensity of the light that is illuminating the or each receiver. Thus, by detecting the variation of reflected light that illuminates each receiver in the receiver array, the signal processing unit is able to determine the motion of the reflected light across the receiver array and hence the motion of a finger across the scroll detection area. When there is no object present on the detection surface 1, as shown in Figure 3a, transmitted rays from the optical transmitters 17 will escape through the optical filter 21, thus the optical receivers 16 will detect a minimum optical intensity.

Referring to Figure 3b, the arrow A indicates the direction away from the mouse user (that is, referring to Figure 1, in an upwards direction). When using a mouse according to the present invention, in order to scroll up or scroll down the computer screen, the user performs the same scrolling up or scrolling down movement with the index finger that is conventionally used to turn the scroll wheel of a conventional three axis computer mouse. For example, the following gestures are used to scroll down the computer screen:
- covering most of the scroll detection area with a finger;
- moving the finger backwards towards the user so that less of the scroll detection area is covered by the finger; and
- repeating these steps as required.
The following gestures are used to scroll up the computer screen:
- removing the user's finger(s) from the scroll detection area;
- moving a finger forwards, away from the user, so that the finger covers more of the scroll detection area; and
- repeating these steps as required.

The covered area 19 of the scroll detection area 1 will vary in accordance with the scrolling direction, rate and amount. The change of the covered area 19 will be detected by the optical receiver array 16 as a continuous change in optical intensity.

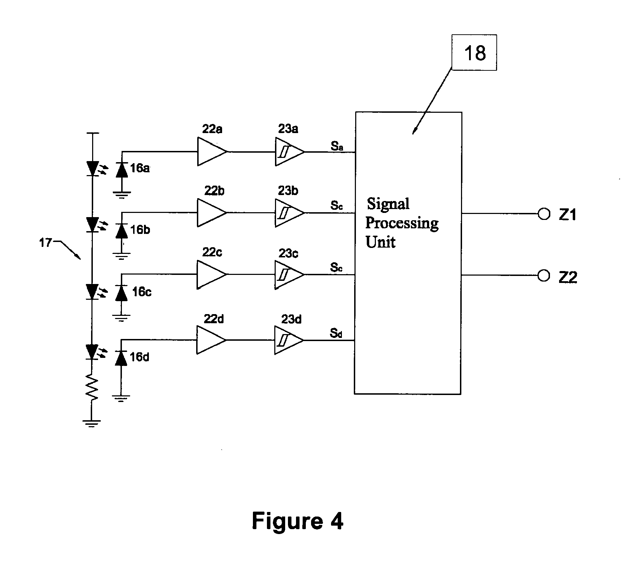

Figure 4 shows a schematic depiction of the signal processing performed in a computer mouse according to the present invention. Optical receivers 16a, 16b, 16c, 16d produce a respective signal that is representative of the intensity of the reflected light for that receiver. These intensity signals that then amplified by the respective signal amplifiers 22a, 22b, 22c, 22d. The amplified signals are fed to the respective signal comparators 23a, 23b, 23c, 23d to produce signals Sₐ, S_{b}, S_{c}, S_{d}. These signals can then be interpreted to determine the direction and rate of scrolling.

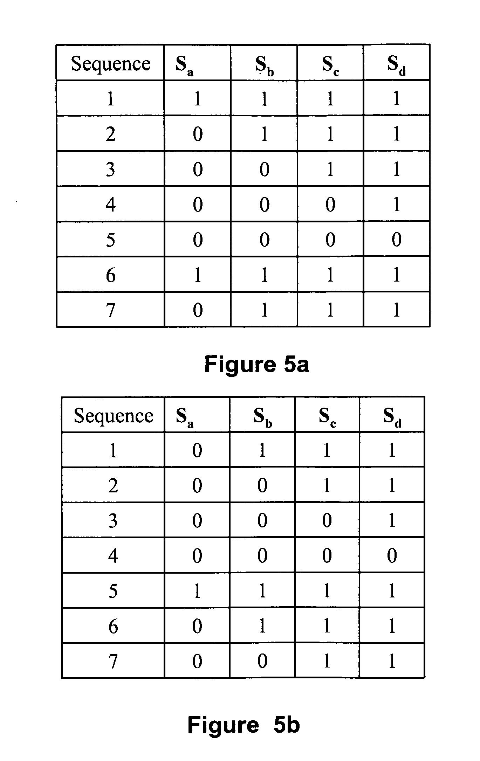

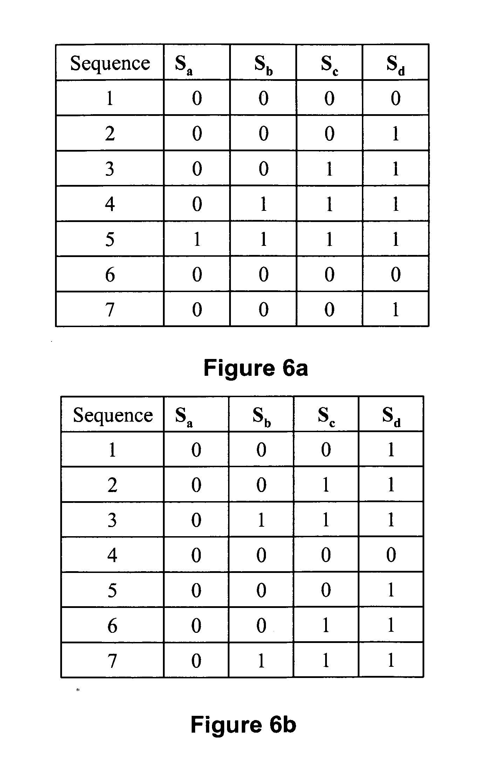

Examples of valid sequential change that indicate scrolling down are shown in Figure 5a and Figure 5b. Examples of valid change sequence that indicate scrolling up are shown in Figure 6a and Figure 6b. For Figure 5a, Figure 5b, Figure 6a and Figure 6b the binary number 1 indicate the present of user's finger at a specific portion of the detection surface 1, whereas binary number 0 indicates otherwise.

The digital signals Sₐ, S_{b}, S_{c}, S_{d} will be processed by the signal processing unit 18 to generate the scrolling signals Z1 and Z2. The signal processing unit can be of any conventional digital signal processor such as microprocessor, microcontroller or DSP. Z1 and Z2 are then fed to a standard scrolling mouse controller 13, such as, for example, EM84510, to activate the scrolling function.

In a preferred embodiment of the present invention an optical filter 20 is located on the optical path between the scroll detection area and the optical receiver array. The optical filter is substantially transparent to the light emitted by the optical transmitter array and/or is substantially opaque to ambient light that may pass through the scroll detection array. It will be readily apparent that the scroll detection area 1 must allow the light emitted from the optical transmitter array to pass through it and thus the scroll detection area may comprise the optical filter.

It will be understood that an alternative form of mouse in which the tracking ball is replaced by a light source, such as an LED, and the motion of the mouse is determined by the light that is reflected back from the surface that the mouse is being used on to a CCD chip. Such a mouse is also suitable for use with the present invention.

Figure 3 and the above discussion has disclosed a receiver array comprising four receivers. It will be understood that the receiver array may comprise a greater or lesser number of receivers. Increasing the number of receivers will increase the resolution of the array but with a concomitant increase in components and complexity.

Figure 3 and the above discussion has also disclosed a transmitter array comprising four transmitters. It will be understood that the transmitter array may comprise one or more receivers, as long as the scroll detection area is illuminated to an intensity that allows the reflected light to be detected at the receiver array.

It will also be understood that the present invention could also be implemented in other input devices for use with computers such as, without limitation, trackballs, joysticks, game pads, drawing tablets, etc. The invention may be integrated into a laptop or portable computer in a similar manner to which touchpads and pointing sticks are integrated.

The invention may also be used in other devices in which it is necessary to scroll though a list of options, for example mobile telephones, game consoles, digital music players, PDAs, etc.

The receiver array may have different geometries from the linear array disclosed in the present invention to provide different functionality. For example two linear arrays may be provided at right angles to each other to allow for vertical and horizontal scrolling: these perpendicular arrays may cross each other such that the receivers in the centre of the array sense both vertical and horizontal motion.

## Claims

1. A detection means for a computer input device, the detection means comprising: a detection region; one or more optical transmitters arranged to illuminate the detection region; a plurality of optical receivers arranged to detect light reflected from the detection means; and control means arranged, in use, to determine the variation of the intensity of the light reflected from the detection means.

2. A detection means according to claim 1 further comprising control means arranged, in use, to determine the variation of the intensity of the light reflected from the detection means at each of the optical receivers in the a plurality of optical receivers.

3. A detection means according to Claim 1 or Claim 2, wherein the control means is arranged to determine the motion of an object across the detection region.

4. A detection means according to any preceding claim further comprising an optical filter located in between the detection region and the plurality of optical receivers.

5. A detection means according to claim 4 wherein the detection region comprises an optical filter.

6. A computer input device comprising a detection means according to any preceding claim.

7. A method of detecting motion for use with a computer input device, the method comprising the steps of:
i) illuminating a detection region with one or more transmitters;
ii) arranging a plurality of optical receivers to detect light reflected from the detection region; and
iii) detecting the variation of the intensity of light reflected from the detection region at the plurality of optical receivers.

8. A method according to claim 7, wherein step iii) comprises detecting the variation of the intensity of light reflected from the detection region at each of the plurality of optical receivers.

9. A method according to claim 7 or claim 8, wherein the method detects the motion of an object across the detection region.
